Europäisches Patentamt

European Patent Office

Office européen des brevets

(11) Veröffentlichungsnummer: **0 188 186**
A1

(12) # EUROPÄISCHE PATENTANMELDUNG

(21) Anmeldenummer: 85890011.1

(22) Anmeldetag: 16.01.85

(51) Int. Cl.⁴: **B 23 Q 1/02**

(43) Veröffentlichungstag der Anmeldung:
23.07.86 Patentblatt 86/30

(84) Benannte Vertragsstaaten:
DE FR GB IT

(71) Anmelder: GFM Gesellschaft für Fertigungstechnik und
Maschinenbau Gesellschaft m.b.H.
Ennserstrasse 14
A-4403 Steyr(AT)

(72) Erfinder: Blaimschein, Gottfried, Dipl.-Ing.
Arnhalmweg 33
A-4407 Steyr(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Fräsmaschine, insbesondere zur Bearbeitung von Kurbel- und Nockenwellen.

(57) Eine Fräsmaschine, insbesondere zur Bearbeitung von Kurbel- und Nockenwellen, weist ein Maschinenbett (1) auf, das in Maschinenlängsrichtung verlaufende Führungsbahnen (2, 3) einerseits für Abstützeinrichtungen (5, 6) zur Abstützung eines Werkstückes (W) und anderseits für wenigstens einen Längsschlitten (4) zur Aufnahme eines Fräsaggregates mit außenschneidendem Fräswerkzeug bildet.

Um eine einfache, kompakte Konstruktion zu erreichen und günstige Verhältnisse für die Späneabfuhr zu schaffen, liegen die beiden Führungsbahnen (2,3) in an sich bekannter Weise zueinander um eine bahnparallele Achse winkelversetzt, wobei die Führungsbahn (3) für die Abstützeinrichtungen (5, 6) gegenüber der Horizontalen durch die Versatzachse abwärts geneigt ist.

EP 0 188 186 A1

- / -

## Fräsmaschine, insbesondere zur Bearbeitung von Kurbel- und Nockenwellen

Die Erfindung betrifft eine Fräsmaschine, insbesondere zur Bearbeitung von Kurbel- und Nockenwellen, mit einem in Maschinenlängsrichtung verlaufende Führungsbahnen bildenden Maschinenbett, von welchen Führungsbahnen die eine Abstützeinrichtungen für das Werkstück, wie Spannstöcke und Lünetten, und die andere wenigstens einen Längsschlitten für ein Fräsaggregat mit außenschneidendem Fräswerkzeug aufnehmen.

Fräsmaschinen mit außenbestückten Fräsrädern sind denen mit innenbestückten Fräsrädern durch die Möglichkeit eines vielfältigeren Einsatzes, einer besseren Beobachtung des Fräsvorganges, eines problemloseren Werkzeugwechsels und auch der einfacheren Anwendung von mehreren Werkzeugen überlegen, so daß sie sich für bestimmte Bearbeitungsfälle und vor allem zur Bearbeitung von Nockenwellen besonders
gut eignen. Bei diesen Außenfräsmaschinen ist es
im Gegensatz zu den Innenfräsmaschinen möglich,
die Längsschlitten mit den Fräsaggregaten zur Längspositionierung der Fräswerkzeuge an den Lünetten
und Spannstöcken vorbeizufahren und dadurch mehrere
während der Bearbeitung bleibend spannende Lünetten
einzusetzen. Die Führungsbahnen für die Werkstückabstützeinrichtungen einerseits und die Längsschlitten
anderseits müssen daher voneinander getrennt sein
und liegen bisher nebeneinander an der Oberseite
des Maschinenbettes, wobei die Führungsebenen durch
die Führungsbahnen horizontal und gegebenenfalls
der Höhe nach versetzt sind. Es entsteht ein breites
Bett mit schlechter Zugänglichkeit insbesondere auch
zum Fräsaggregat, die eine Behinderung des Werkzeugwechsels mit sich bringt. Außerdem kommt es zu einer
Späneabfuhr durch das Maschinenbett, was die Montage
und Wartung des im oder unterhalb des Bettes vorgesehenen Späneförderers erschwert und vor allem
auch die Gefahr einer unerwünschten Erwärmung des
Maschinenbettes mit all ihren Nachteilen hervorruft.
Nicht zuletzt ist das Maschinenbett wegen seines
großen Platzbedarfes und des durch die ungünstigen
Belastungsverhältnisse bedingten Konstruktionsaufwandes verhältnismäßig teuer.

Es gibt auch schon ein Maschinenbett mit einer
etwa horizontalen Hauptführung für die Abstützeinrichtungen und einer dazu aufwärts geneigten Zusatzführung für weitere Maschinenbaugruppen, doch ist
diese Zusatzführung nur zur Aufnahme kleinerer
Maschinenteile und -aggregate geeignet und das Bett
läßt sich daher zweckmäßig auch nur für Drehmaschinen, Bohrmaschinen u. dgl. verwenden, nicht aber für größere Fräsmaschinen. Außerdem kommt es auch hier zu einer ungünstigen Späneabfuhr durch das Bett.

Der Erfindung liegt daher die Aufgabe zugrunde, diese Mängel zu beseitigen und eine Fräsmaschine der eingangs geschilderten Art zu schaffen, die aufwandsarm und kompakt aufgebaut ist, günstige Verhältnisse für die Späneabfuhr bietet, sich durch beste Zugänglichkeit und Wartungsfreundlichkeit auszeichnet und auch eine relativ billige Herstellung erlaubt.

Die Erfindung löst diese Aufgabe dadurch, daß die beiden Führungsbahnen zur Aufnahme der Abstützeinrichtungen und des oder der Längsschlitten in an sich bekannter Weise zueinander um eine bahnparallele Achse winkelversetzt liegen, wobei die Führungsbahn für die Abstützeinrichtungen gegenüber der Horizontalen durch die Versatzachse abwärts geneigt ist. Durch den Winkelversatz der Führungsbahnen sind die Führungsebenen zueinander schräg oder gar quergestellt, so daß sich das Maschinenbett entsprechend verschmälern läßt. Statt eines flachen weit ausladenden Bettes entsteht ein etwas höheres aber dafür kompakteres Bett mit verbesserten Belastungsverhältnissen und erleichterter Zugänglichkeit. Durch die abfallende Neigung der Führungsbahn für die Abstützeinrichtungen sind weiters einfache Bedingungen für eine Späneabfuhr außerhalb des Bettes zu erreichen und der Gefahr einer Maschinenbetterwärmung durch heiße Späne kann auf rationelle Weise vorgebeugt werden.

Grundsätzlich ist es möglich, die Größe des gegenseitigen Winkelversatzes der Führungsbahnen und deren Anordnung am Maschinenbett den jeweiligen Anforderungen und Maschinenkonzeptionen anzupassen, doch für Maschinenbetten mit im wesentlichen rechteckigem oder trapezförmigem Querschnitt ergibt sich eine besonders vorteilhafte Ausgestaltung, wenn erfindungsgemäß die Führungsbahn für den oder die Längsschlitten an der Oberseite des Maschinenbettes und die Führungsbahn für die Abstützeinrichtungen an einer der anschließenden Längsseiten des Maschinenbettes verlaufen. Das kastenförmige Maschinenbett erlaubt mit geringem Aufwand die Herstellung eines stabilen, tragfähigen Gerüstes für die Fräsmaschine, wobei durch die hochgestellte Führungsebene für die Werkstückabstützeinrichtungen an einer Längsseite des Maschinenbettes und den in üblicher Weise an der Oberseite verfahrbaren Längsschlitten mit dem Fräsaggregat die Bearbeitungsstellen im Bereich über oder außerhalb der zwischen diesen Führungsbahnen sich befindenden Längskante des Maschinenbettes liegen und daher die Späne zumindest großteils seitlich neben dem Maschinenbett abfallen, was eine Erwärmung des Maschinenbettes vermeidet und die einfache, frei zugängliche Anordnung des Späneförderers seitlich neben dem Maschinenbett ermöglicht.

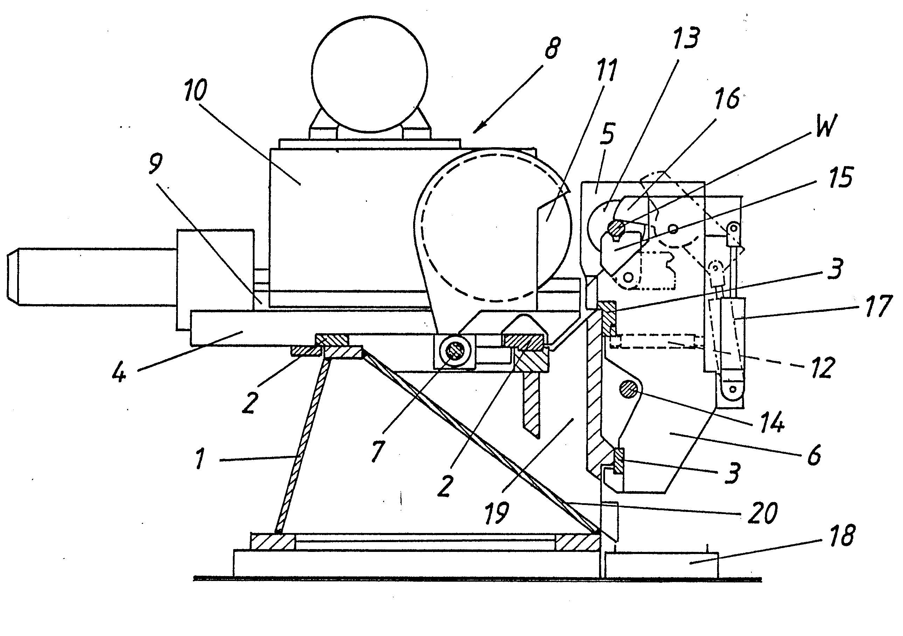

In der Zeichnung ist der Erfindungsgegenstand beispielsweise an Hand eines schematischen Querschnittes durch eine erfindungsgemäße Fräsmaschine veranschaulicht.

Das Maschinenbett 1 einer Fräsmaschine weist zwei in Maschinenlängsrichtung verlaufende Führungsbahnen 2, 3 auf, von denen die eine an der Maschinenbettoberseite liegende Führungsbahn 2 einen Längsschlitten 4 und die dazu etwa rechtwinkelig versetzte, an einer Maschinenbettlängsseite liegende Führungsbahn 3 Spannstöcke 5 und Lünetten 6 zur Abstützung des zu bearbeiteten Werkstückes W aufnehmen.

Der Längsschlitten 4, der über einen Spindeltrieb 7 der Führungsbahn 2 entlang verfahrbar ist, trägt ein Fräsaggregat 8, das aus einem verschiebbar auf Querführungen 9 sitzenden Frässchlitten 10 und einem außenschneidenden Fräswerkzeug 11 besteht, so daß nach einem Positionieren des Fräsaggregates 8 mit Hilfe des Längsschlittens 4 das Fräswerkzeug 11 an der Einstichstelle über den Frässchlitten 10 für eine Werkstückbearbeitung zum Einsatz gebracht werden kann.

Das Werkstück W wird bei der Bearbeitung endseitig durch die Spannstöcke 5 gespannt und zusätzlich durch eine oder mehrere Lünetten 6 zwischen den Spannstöcken 5 abgestützt, wobei die Lünetten 6 und die Spannstöcke 5 in ihrer Lage auf der Führungsbahn 3 auf das jeweilige Werkstück W bzw. an die jeweiligen Abstützstellen durch geeignete Stelltriebe 12 angepaßt werden können. Da das Werkstück W bei einer Bearbeitung gedreht werden muß, besitzen die Spannstöcke 5 antreibbare Spannfutter 13, die über eine gemeinsame Antriebswelle 14 miteinander synchronisiert sind.

Als zusätzliche Werkstückabstützung dienen Lünetten 6, die eine untere Stützbacke 15 und eine obere Klemmbacke 16 aufweisen, wobei die Klemmbacke 16 schwenkbar lagert und über einen Hydrauliktrieb 17 betätigbar ist. Auch die Stützbacke 15 ist in eine Außerbetriebsstellung abklappbar, so daß die Lünetten 6 bei abgeklappten
Stützbacken 15 und hochgeschwenkten Klemmbacken
16 (strichpunktierte Darstellung) außer Funktion
bleiben können und das Werkstück W wahlweise
ungestützt lassen.

Die zueinander winkelversetzt angeordneten
Führungsbahnen 2, 3 erlauben die Ausbildung eines
kompakten Maschinenbettes 1, wobei alle Maschinenteile gut zugänglich sind und vor allem auch ein
ungehinderter Werkzeugwechsel ermöglicht wird.
Außerdem gewährleistet die an der Längsseite
verlaufende Führungsbahn 3 mit ihrer etwa vertikalen Führungsebene eine problemlose Späneabfuhr,
da die erzeugten Späne großteils neben dem Maschinenbett 1 auf den offenliegenden Späneförderer 18 abfallen und der eventuell in entsprechende Abfuhröffnungen 19 des Maschinenbettes 1 gelangende
Teil der Späne auf kurzem Wege durch eine seitliche Rutsche 20 wieder aus dem Maschinenbett 1
heraus auf den Späneförderer 18 kommt, so daß
eine Erwärmung des Maschinenbettes durch die
heißen Späne nicht zu befürchten ist.

Patentansprüche:

1. Fräsmaschine, insbesondere zur Bearbeitung von Kurbel- und Nockenwellen, mit einem in Maschinenlängsrichtung verlaufende Führungsbahnen (2, 3) bildenden Maschinenbett (1), von welchen Führungsbahnen die eine (3) Abstützeinrichtungen (5, 6) für das Werkstück (w), wie Spannstöcke (5) und Lünetten (6), und die andere (2) wenigstens einen Längsschlitten (4) für ein Fräsaggregat (8) mit außenschneidendem Fräswerkzeug (11) aufnehmen, dadurch gekennzeichnet, daß die beiden Führungsbahnen (2, 3) zur Aufnahme der Abstützeinrichtungen (5, 6) und des oder der Längsschlitten (4) in an sich bekannter Weise zueinander um eine bahnparallele Achse winkelversetzt liegen, wobei die Führungsbahn (3) für die Abstützeinrichtungen (5, 6) gegenüber der Horizontalen durch die Versatzachse abwärts geneigt ist.

2. Fräsmaschine nach Anspruch 1, mit einem im wesentlichen einen rechteckigen oder trapezförmigen Querschnitt aufweisenden Maschinenbett (1), dadurch gekennzeichnet, daß die Führungsbahn (2) für den oder die Längsschlitten (4) an der Oberseite des Maschinenbettes (1) und die Führungsbahn (3) für die Abstützeinrichtungen (5, 6) an einer der anschließenden Längsseiten des Maschinenbettes (1) verlaufen.

0188186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 932 590 (VOGT) <br> * Insgesamt * | 1,2 | B 23 Q 1/02 |
| | --- | | |
| A | DE-C- 117 742 (KLEBER) | | |
| | --- | | |
| A | DE-C- 332 181 (WORMSER) | | |
| | --- | | |
| A | GB-A- 655 090 (MUSIL) | | |
| | ----- | | |

RECHERCHIERTE SACHGEBIETE (Int. Cl.4)

B 23 Q 1/00
B 23 Q 5/00
B 23 Q 11/00
B 23 C 3/00
B 23 B 3/00

Der vorliegende Recherchenbericht wurde für alle Patentansprüche erstellt.

| Recherchenort <br> DEN HAAG | Abschlußdatum der Recherche <br> 19-09-1985 | Prüfer <br> BOGAERT F.L. |
|---|---|---|